# EUROPEAN PATENT APPLICATION

(11) **EP 4 292 998 A1**
(43) Date of publication of application: **20.12.2023**
(21) Application number: 22179616.2
(22) Date of filing: 17.06.2022
(51) Int. Cl.: C04B 38/10, C04B 28/02, C04B 28/04, C04B 28/14

(54) **RIGID INORGANIC FOAMS**

(71) Applicant: Sika Technology AG, 6340 Baar (CH)
(72) Inventor: ROTZETTER, Aline, 5430 Wettingen (CH); BUCHER, Reto, 6064 Kerns (CH); BARMET, Robin, 6060 Sarnen (CH); ACKERMANN, Herbert, 8632 Tann (CH); SCHLUMPF, Michael, 8143 Stallikon (CH); ROHNER, Stefano, 8965 Berikon (CH); HEIDTMAN, Patricia, 6010 Kriens (CH)
(74) Representative: Sika Patent Attorneys

(57) **Abstract**

The present invention relates to rigid inorganic foams comprising at least one cured mineral binder, at least one surfactant, and at least one polymer obtained from the combination of polyisocyanates and polyols and/or polyamines, said polymer comprising anionic groups. The present invention also relates to methods of making rigid inorganic foams and to their use as products or in systems for thermal insulation, acoustic insulation, lightweight construction, and/or passive fire protection.

## Description

### Technical Field

The present invention relates to rigid inorganic foams. Rigid inorganic foams of the present invention comprise at least one cured mineral binder, at least one at least one surfactant and/or particles, and at least one polymer obtained from the combination of polyisocyanates and polyols and/or polyamines, said polymer comprising anionic groups. The present invention also relates to methods of making rigid inorganic foams and to their use as products or in systems for thermal insulation, acoustic insulation, lightweight construction, and/or passive fire protection.

### Background of the invention

Inorganic foam materials have found many uses in construction industry. For example, they are used as a material in thermal insulation systems. A particular advantage of inorganic foam materials is their low combustibility, especially compared to organic materials commonly used in thermal insulation systems such as XPS or PIR. Another advantage is that inorganic foams are lightweight and can thus easily be integrated into buildings, e.g. facades or roofs.

However, the mechanical stability of inorganic foam materials and in particular of cement based foam materials is typically low. A low mechanical stability makes the installation of insulation systems comprising inorganic foams difficult.

WO 2019/038105 discloses inorganic hybrid foams comprising a mineral binder, at least one polymer derived from ethylenically unsaturated monomers or derived from a combination of polyisocyanates with polyols and/or polyamines, at least one surfactant, at least one thickener, and water. These foams are reported to have increased compressive strength and better adhesion to concrete. However, especially polymers obtained from the combination of polyisocyanates and polyols and/or polyamines are disclosed in the WO2019/038105 only in very general terms.

It is especially desirable to further increase the compressive strength of the inorganic foams disclosed by WO2019/038105. This will help to use such inorganic foams in thermal insulation systems for buildings as well as for other purposes in the construction industry.

### Summary of the invention

It is the objective of the present invention to provide inorganic foams with increased mechanical strength. Especially, inorganic foams of the present invention should have a high compressive strength. Inorganic foams of the present invention preferably can be used as thermal insulation and/or acoustic insulation, lightweight construction, and/or passive fire protection. It is another objective of the present invention to provide thermal insulation systems and/or acoustic insulation systems and/or passive fire protection systems, especially systems which can be applied to buildings, preferably facades, floors, and/or roofs.

These objectives are achieved by the subject matter as claimed in the independent claims.

It has surprisingly been found that the compressive strength of inorganic foams can be increased by including certain specific polymers obtained from the combination of polyisocyanates and polyols and/or polyamines which polymers comprise anionic groups. It has further been found that the additional use of certain polymer blends consisting of polyvinylalcohol and additionally polymers based on vinylester, (meth)acrylic acid esters, vinyl aromatics, vinyl halogenides, and/or olefines may further increase the compressive strength of inorganic foams.

It is another advantage of rigid inorganic foams of the present invention that they can be formulated with a low amount of superplasticizer for cement. This is especially advantageous, because such superplasticizers are known to retard the cement hydration, which, in the case of inorganic foams based on cement, may lead to collapse of the foam before curing occurs. The polymers obtained from the combination of polyisocyanates and polyols and/or polyamines which polymers comprise anionic groups may act as plasticizers for inorganic binders, in particular cement, and thus reduce the need for additional superplasticizers.

The polymers obtained from the combination of polyisocyanates and polyols and/or polyamines which polymers comprise anionic groups lead to the formation of rigid inorganic foams with closed cell structures. This is beneficial, because a closed cell structure typically also leads to higher compressive strength of the foam as compared to open cell structures at the same densities. Additionally, thermal insulation properties are typically improved in a closed cell foam structure.

Rigid inorganic foams of the present invention have one or more of the following advantages:
(i) low density,
(ii) closed cell foam structure,
(iii) increased mechanical strength, especially compressive strength, impact resistance, and/or flexural strength,
(iv) low water uptake,
(v) quick drying characteristics after wetting,
(vi) non-combustible,
(vii) low thermal conductivity,
(viii) high sound dampening properties.

Further aspects of the present invention are the subject of independent claims. Preferred embodiments of the present invention are the subject of dependent claims.

### Ways for carrying out the invention

In a first aspect the present invention relates to a rigid inorganic foam comprising
a) at least one cured mineral binder,
b) at least one surfactant **S** and/or particles **N**, and
c) at least one polymer obtained from the combination of polyisocyanates and polyols and/or polyamines,
characterized in that the at least one polymer obtained from the combination of polyisocyanates and polyols and/or polyamines comprises anionic groups.

The term "rigid inorganic foams" within the present context relates to a material composed of gas bubbles entrapped in a hard, inorganic matrix. The gas bubbles can be in the form of pores and/or cells. The content of the gas bubbles entrapped in the inorganic matrix may vary in a range of from 20 - 99 Vol%, preferably 20 - 98 Vol%, especially 50 - 95 Vol%, related to the total volume of the rigid inorganic foam. In other words, the term "rigid inorganic foams" relates to inorganic materials with high porosity. A rigid inorganic foam may comprise gas bubbles in the form of an interconnected network (open cell foam) or in isolated form (closed cell foam) or as a mixture of interconnected and isolated cells. A closed cell foam is preferred within the present context. The gas can be any gas, preferably it is air. The hard inorganic matrix is essentially dry. A rigid inorganic foam of the present invention essentially is free of water. Essentially free of water means that the amount of water is less than 5 w%, preferably less than 1 w%, especially less than 0.5 w%, in each case relative to the total weight of the rigid inorganic foam. Water adsorbed to the surface of otherwise essentially dry rigid inorganic foam does not count for this definition. The hard inorganic matrix comprises at least one cured mineral binder. The inorganic matrix may comprise other organic and/or inorganic materials. It is preferred that the inorganic matrix consists to at least 51 w%, preferably at least 70 w%, more preferably at least 80 w%, in each case relative to the total dry weight of the inorganic matrix, of inorganic materials. Of course, the inorganic matrix additionally comprises at least the surfactant **S** and/or particles **N** and the polymer obtained from the combination of polyisocyanates and polyols and/or polyamines. The total content of inorganic materials in the inorganic matrix thus is lower than 100 w%, relative to the total dry weight of the inorganic matrix. The terms "rigid" or "hard" may be associated with a certain compressive strength of the inorganic foam. Preferably, a rigid inorganic foam of the present invention has a compressive strength of at least 10 kPa, more preferably at least 50 kPa, still more preferably at least 100 kPa. Compressive strength can be measured according to standard DIN EN 826 at 10% compression. The porosity of a rigid inorganic foam or a porous inorganic material can be measured by mercury porosimetry according to standard ISO 15901-1:2016. However, it is often more convenient to consider the dry density of porous materials. Within the present context, a high porosity is linked to a low density. In other words, the lower the density, the higher is the porosity of a rigid inorganic foam. Throughout the present context, when density is mentioned or density values are given, such densities are measured gravimetrically. A preferred measurement method is as follows: a sample cube having dimensions of 10x10x10 cm is first cut from the material and then dried in an oven at a temperature of 70 °C until the weight of the material remains constant. The weight of the sample cube is then measured, and the density of the material in g/l is obtained by dividing the measured weight of the cube in g by 1 I.

Within the present context, the term "low density" stands for a density of not more than 500 g/l.

According to embodiments, rigid inorganic foams of the present invention have a density of not more than 500 g per liter, especially not more than 300 g per liter, in particular not more than 200 g per liter. For example, the density is from 20 - 500 g per liter, preferably 50 - 300 g per liter, more preferably 70 - 200 g per liter. However, higher densities are in principle also possible.

Thus, a preferred rigid inorganic foam of the present invention is essentially free of water, has a compressive strength measured according to standard DIN EN 826 at 10% compression of at least 10 kPa, more preferably at least 50 kPa, still more preferably at least 100 kPa, and has a density of from 20 - 500 g per liter, preferably 50 - 300 g per liter, more preferably 70 - 200 g per liter. A particularly preferred rigid inorganic foam of the present invention additionally has a closed cell structure.

Optionally, an additional liquid phase may be present in a rigid inorganic foam of the present invention.

The term "cured mineral binder" within the present context stands for substances that are inorganic in nature and that are at least partially, preferably fully cured. Curing may occur by chemical reaction, especially by hydration, of the mineral binder or by physical reaction, especially by drying, of the mineral binder. Preferably, the reaction products are not water soluble.

According to preferred embodiments, the mineral binder is selected from cements, gypsum, lime, magnesia, alumina, geopolymers, latent hydraulic binders, and/or pozzolanes.

Cements can in particular be Portland cements of type CEM I, CEM II, CEM III, CEM IV, or CEM V as described in standard EN 197-1, calcium aluminate cements as described in standard EN 14647, and/or calcium sulphoaluminate cements. The term "gypsum" is meant to encompass CaSO₄ in various forms, in particular CaSO₄ anhydrite, CaSO₄ α- and β- hemihydrate, and CaSO₄ dihydrate. The term "lime" is meant to encompass natural hydraulic lime, formulated lime, hydraulic lime, and air lime as described in the standard EN 459-1:2015. The term "alumina" stands for aluminum oxides, aluminum hydroxides, and/or aluminum oxy-hydroxides such as gibbsite and boehmite, calcined or flash calcined alumina, alumina resulting from the Bayer process, hydratable alumina such as amorphous mesophase alumina and rho phase alumina. Pozzolanes and latent hydraulic materials stands in particular for type II concrete additives with latent hydraulic and/or pozzolanic character according to EN 206-1. Pozzolanes and latent hydraulic materials preferably are selected from the group consisting of slag, clay, calcined clay, especially metakaolin, kiln dust, microsilica, fly ash, pyrogenic silica, precipitated silica, silica fume, zeolite, rice husk ash, burnt oil shale, and natural pozzolanes such as pumice, trass, and finely ground limestone.

Thus, a cured mineral binder within the present context preferably is a fully hydrated or fully dried cement, gypsum, lime, magnesia, alumina, geopolymer, latent hydraulic binder, and/or pozzolane. Particularly preferred, the cured mineral binder is a fully hydrated Portland cement or a fully hydrated aluminate cement, or a fully dried gypsum, or a mixture thereof.

According to embodiments, the cured mineral binder has a proportion of 9 - 99 w%, preferably 25 - 85 w%, more preferably 40 - 80 w%, relative to the total dry weight of the rigid inorganic foam.

The at least one surfactant **S** may be selected from non-ionic, anionic, cationic, zwitterionic, and amphiphilic compounds as well as from proteins or mixtures thereof. According to some embodiments, a combination of non-ionic and anionic surfactants is used. Suitable anionic surfactants are diphenylene oxide sulfonates, alkane and alkylbenzene sulfonates, alkylnaphthalene sulfonates, olefin sulfonates, alkyl ether sulfonates, alkyl sulfates, alkyl ether sulfates, alpha-sulfo fatty acid esters, acylaminoalkane sulfonates, acylisothionates, alkyl ether carboxylates, N-acyl sarcosinates, alkyl and alkyl ether phosphates. Examples of suitable anionic surfactants include C8-C18-alkyl sulfates, C8-C18-alkyl ether sulfates, C8-C18-alkyl sulfonates, C8-C18-alkyl benzene sulfonates, C8-C18-α-olefin sulfonates, C8-C18-sulfosuccinates, α -sulfo-C8-C18-fatty acid salts and C8-C18-fatty acid salts. The anionic surfactants are generally present as alkali metal salts, particularly as sodium salts. Examples of sodium salts of anionic surfactants are sodium lauryl sulfate, sodium myristyl sulfate, sodium cetyl sulfate, sodium sulfates of ethoxylated lauryl or myristyl alcohol with a degree of ethoxylation of 2 to 10, lauryl or cetyl sulfonate sodium salt, hexadecyl benzene sulfonate sodium salt, C14/C16-α-olefin sulfonate sodium salt, lauryl or cetyl sulfosuccinate sodium salt, disodium 2-sulfolaurate, sodium stearate or mixtures thereof. Suitable nonionic surfactants include alkylphenol polyglycol ethers, fatty alcohol polyglycol ethers, fatty acid polyglycol ethers, fatty acid alkanolamides, block copolymers, amine oxides, glycerol fatty acid esters, sorbitan esters or alkylpolyglucosides. Examples of suitable nonionic surfactants include C8-C18-fatty alcohol ethoxylates, block copolymers of ethylene oxide and propylene oxide, or C8-C18-alkyl polyglycosides or mixtures thereof. Examples of block copolymers are poloxamers. Poloxamers are block copolymers of ethylene oxide and propylene oxide, with preferred poloxamers containing from 2 to 130 ethylene oxide units and from 10 to 70 propylene oxide units. Examples of cationic surfactants are alkyltriammonium salts, Alkylbenzyldimethylammonium salts or alkylpyridinium salts. Suitable zwitterionic surfactants are betaines. One example of zwitterionic surfactants is cocamidopropyl betaine and particularly lauramidopropyl betaine.

Both, plant and animal proteins or mixtures thereof can be used as protein based surfactants. Examples of proteins suitable as surfactants include keratin, hydrolyzed keratin, collagen, hydrolyzed collagen, or soy-based proteins.

According to preferred embodiments, the at least one surfactant **S** is selected from non-ionic and anionic surfactants, preferably from C14-C16-alkyl sulfonates, esters of 2-sulfo-butandioic acid, alkylpolyglucosides, or mixtures thereof, or cocamidopropyl betaine, or protein based surfactant.

According to one or more embodiments, the proportion of the at least one surfactant **S** is 0.1 - 25 w%, preferably 0.5 - 20 w%, more preferably 1 - 15 w%, relative to the total dry weight of the rigid inorganic foam.

Particles **N** of the present invention preferably have a particle size of 10 nm - 500 µm, preferably 20 nm - 300 µm, more preferably 25 nm - 150 µm, still more preferably 30 nm - 100 µm, especially 30 nm - 1 µm. The particle size can be determined by laser diffraction as described in ISO 13320:2009. In particular, a Mastersizer 2000 instrument with a Hydro 2000G dispersion unit and the Mastersizer 2000 software from Malvern Instruments GmbH (Germany) is used. Isopropanol, for example, is suitable as the measuring medium. Preferably, a particle size of non-spherical or irregular particles is represented by the equivalent spherical diameter of a sphere of equivalent volume. Throughout this invention, whenever a range of particle sizes is given, the lower values of the ranges represent D10 values whereas the upper values of the ranges given for the particle size herein represent D90 values of the respective particle size distribution.

According to some embodiments, the particles **N** of the present invention are nanoparticles. This means that the particles **N** have a particle size, especially a particle size D50, in the nanometer range.

In particular, the particles **N** are chosen from inorganic particles, especially from pure and mixed metal oxides, hydroxides, carbides, nitrides, phosphates, carbonates, silicates, sulfates. According to embodiments, the particles **N** are chosen from particles of clay, talc, silica, calcium carbonate, ferrite, gibbsite, titanium oxide, zinc oxide, aluminum oxide, magnesium oxide, zirconium oxide, tin oxide, cerium oxide, spinels, aluminum hydroxide, calcium hydroxide, magnesium hydroxide, silicon carbide, boron carbide, silicon nitride, boron nitride, calcium phosphates, nickel carbonate, calcium carbonate, magnesium carbonate, silica fume, fly ash, quartz, ground glasses, slag, calcium silicates, mullite, cordierite, zeolites, diatomaceous earth, cement, calcium sulfate and/or carbon black particles. Especially, the particles are silica particles.

According to another preferred implementation, the particles are chosen from organic particles, especially polymer particles, in particular polystyrene particles and/or poly(methyl methacrylate) particles.

A proportion of the particles **N,** if present, in particular is from 1 - 50 vol%, in particular 2 - 20 vol%, especially 3 - 10 vol%, with respect to the total volume of the hardened inorganic foam.

The rigid foam comprises at least one polymer obtained from the combination of polyisocyanates and polyols and/or polyamines. Such polymers comprise urethane groups and/or urea groups. Other groups such as allophanate or biuret groups may also be comprised. Polyurethanes and/or polyureas are commonly used names for such polymers. For ease of reading, throughout the present invention, the term "polyurethane" will be used and means a polymer obtained from the combination of polyisocyanates and polyols and/or polyamines. Thus, the term "polyurethane" within the present context encompasses polyurethanes, polyureas, and polymers comprising other groups, such as e.g. allophanate or biuret groups, in addition to urethane and/or urea groups.

According to embodiments, polyurethanes of the present invention comprise anionic groups in an amount to give an anionic charge density of 0.01 - 100 meq per g of polymer, preferably 0.01 - 10 meq per g of polymer, more preferably 0.05 - 1 meq per g of polymer. Throughout this invention, the term "meq" stands for "milliequivalents" and refers to the amount of anionic charges in mmol.

The term "polyisocyanates" is meant to encompass organic molecules with more than one isocyanate group, including diisocyanates.

Diisocyanates suitable for the production of polyurethanes are aromatic, aliphatic or cycloaliphatic diisocyanates with a molecular weight less than 500 g/mol. Examples of suitable aromatic diisocyanates are all isomers of toluene diisocyanate (TDI) either in isomerically pure form or as a mixture of several isomers, naphthalene-1,5-diisocyanate (NDI), naphthalene-1,4-diisocyanate (NDI), diphenylmethane-4,4'-diisocyanate (MDI), diphenylmethane-2,4'-diisocyanate as well as mixtures of 4,4'-diphenyl methane diisocyanate with the 2,4'-isomer, xylylene diisocyanate (XDI), 4,4'-di-phenyl dimethyl methane diisocyanate, di- and tetraalkyl-diphenylmethane diisocyanate, 4,4'-dibenzyl diisocyanate, 1,3-phenylene diisocyanate, 1,4-phenylene diisocyanate. Examples of suitable cycloaliphatic diisocyanates are the hydrogenation products of the aforementioned aromatic diisocyanates such as 4,4'-dicyclohexylmethane diisocyanate (H12MDI), cyclohexane-1,4-diisocyanate, hydrogenated xylylene diisocyanate (H6XDI), 1-methyl-2,4-diisocyanato-cyclohexane, hydrogenated p-tetramethylxylene diisocyanate (m-TMXDI, p-TMXDI). Further suitable diisocyanates are 1-lsocyanatomethyl-3-isocyanato-1,5,5-trimethylcyclohexane (isophorone diisocyanate, IPDI) and dimer fatty acid diisocyanate. Examples of aliphatic diisocyanates include tetramethoxybutane-1,4-diisocyanate, butane-1,4-diisocyanate, hexane-1,6-diisocyanate (HDI), 1,6-diiso-cyanato-2,2,4-trimethylhexane, 1,6-diisocyanato-2,4,4-trimethylhexane, lysine diisocyanate, and 1,12-dodecanediisocyanate (C12DI). According to embodiments, diisocyanates are aliphatic diisocyanates, preferably selected from IPDI, HDI, and H12MDI, especially IPDI. According to further embodiments, diisocyanates are aromatic diisocyanates, preferably selected from TDI and MDI.

Mixtures of different polyisocyanates may also be used for the production of polyurethanes. Examples include the isomers of toluene diisocyanate (TDI), naphthalene-1,4-diisocyanate (NDI), diphenylmethane2,4'-diisocyanate (MDI), isophorone diisocyanate (IPDI) or hydrogenated 2,4' -MDI. According to embodiments polyisocyanates having isocyanate groups of different reactivity are used for the production of polyurethanes.

Polyols suitable for the production of polyurethanes are polyhydroxy compounds selected from polyether polyols or polyester polyols. Preferably, polyhydroxy compounds are organic molecules with two or three hydroxyl groups per molecule in the molecular weight range from 200 to 3000 g/mol, preferably in the range from 400 to 2000 g/mol. Examples are di- and/or trifunctional polypropylene glycols or polyethylene glycols. One particularly useful example is a linear difunctional polyethylene glycol monomethyl ether. Random and/or block copolymers of ethylene oxide and propylene oxide can also be used. Another group of polyether polyols useful for the production of polyurethanes are the polytetramethylene glycols (poly(oxytetramethylene) glycol, polyTHF), which are produced, for example, by the acid polymerization of tetrahydrofuran.

Suitable polyols are also polyesters produced by condensation of dicarboxylic acids or tricarboxylic acids, such as adipic acid, sebacic acid, glutaric acid, azelaic acid, undecanedioic acid, dodecanedioic acid, 3,3-dimethylglutaric acid, terephthalic acid, isophthalic acid, hexahydrophthalic acid, dimer fatty acid or mixtures thereof with low-molecular diols or triols such as ethylene glycol, propylene glycol, diethylene glycol, triethylene glycol, dipropylene glycol, 1,4-butanediol, 1,6-hexanediol, 1,8-octanediol, 1,10-decanediol, 1,12-dodecanediol, dimer fatty alcohol, glycerol, trimethylolpropane or mixtures thereof. Another group of polyols to be used according to the invention are the polyesters based on ε-caprolactone, also called polycaprolactones.

Polyester polyols of oleochemical origin can also be used. Such polyester polyols can be prepared, for example, by complete ring opening of epoxidized triglycerides of an at least partially olefinically unsaturated fatty acid-containing fatty mixture with one or more alcohols having 1 to 12 carbon atoms and subsequent partial transesterification of the triglyceride derivatives to alkyl ester polyols having 1 to 12 carbon atoms in the alkyl radical. This may be, for example, castor oil.

Other suitable polyols are polycarbonate polyols, polycaprolactone diols, dimer diols or hydroxy-functional polybutadienes.

Further suitable polyols are aliphatic alkylenediols. These may be linear or branched C2 to C24 diols having OH groups terminally or laterally in the carbon chain.

Examples are ethylene glycol, propylene glycol, butanediol-1 ,4, pentanediol-1 ,5, hexanediol-1 ,6, heptanediol-1 ,7, octanediol-1 ,8 and their higher homologues or isomers. Also suitable are higher functional alcohols such as glycerol, trimethylolpropane, pentaerythritol or sugar alcohols. However, such higher-functional polyols are less preferred and should only be present in small proportions in the polyols.

Still further suitable polyols are dimethylolpropionic acid (DMPA), tartaric acid, N,N-bis(2-hydroxyethyl)-2-aminoethane sulfonic acid, and N-methyl-diethanolamine.

Of course, mixtures of the above mentioned polyols may also be used.

The polyols shall preferably be liquid. The molecular weight should preferably be below 2000 g/mol in particular below 1500 g/mol (number average molecular weight, MN, as determinable by GPC). It is preferred if diols are used or mixtures thereof.

Suitable polyamines are aliphatic, cycloaliphatic or arylaliphatic primary diamines such as, ethylendiamine, 1,2-propanediamine, 1,3-propanediamine, 2-methyl-1,2-propanediamine, 2,2-dimethyl-1,3-propanediamine, 1,3-butanediamine, 1,4-butanediamine, 1,3-pentanediamine (DAMP), 1,5-pentanediamine, 1,5-di-amino-2-methylpentane (MPMD), 2-butyl-2-ethyl-1,5-pentanediamine (C11-Neodiamine), 1,6-hexanediamine, 2,5-dimethyl-1,6-hexanediamine, 2,2,4- and 2,4,4-trimethylhexamethylenediamine (TMD), 1,7-heptanediamine, 1,8-octanediamine, 1,9-nonanediamine, 1,10-decanediamine, 1,11-undecanediamine, 1,12-dodecanediamine, 1,2-, 1,3- and 1,4-diaminocyclohexane, bis-(4-aminocyclohexyl)methane (H12-MDA), bis-(4-amino-3-methylcyclohexyl)methane, bis-(4-amino-3-ethylcyclohexyl)methane, bis-(4-amino-3,5-dimethylcyclohexyl)methane, bis-(4-amino-3-ethyl-5-methylcyclohexyl)methane (M-MECA), 1-amino-3-aminomethyl-3,5,5-trimethylcyclohexane (Isophorondiamine or IPDA), 2- and 4-methyl-1,3-diaminocyclohexane and mixtures thereof, 1,3- and 1,4-bis-(aminomethyl)cyclohexane, 2,5(2,6)-bis-(aminomethyl)bicyclo[2.2.1]heptane (NBDA), 1,4-diamino-2,2,6-trimethylcyclohexane (TMCDA), 1,8-menthanediamine, 3,9-bis-(3-aminopropyl)-2,4,8,10-tetraoxaspiro[5,5]undecane, and 1,3- and 1,4-Bis-(aminomethyl)-benzene.

Further suitable polyamines are aliphatic, cycloaliphatic or arylaliphatic primary triamines such as 4-aminomethyl-1,8-octanediamine, 1,3,5-tris-(aminomethyl)benzene, 1,3,5-tris-(aminomethyl)cyclohexane, tris-(2-aminoethyl)amine, tris-(2-amino-propyl)amine and tris-(3-aminopropyl)amine.

Further suitable polyamines are ether group-containing aliphatic primary diamines, such as in particular bis-(2-aminoethyl)ether, 3,6-dioxaoctane-1,8-diamine, 4,7-dioxadecane-1,10-diamine, 4,7-dioxadecane-2,9-diamine, 4,9-dioxadodecane-1,12-diamine, 5, 8-dioxadodecane-3,10-diamine, 4,7,10-trioxatridecane-1,13-diamine and higher oligomers of these diamines, bis-(3-aminopropyl)polytetrahydrofurans and other polytetrahydrofuran diamines, and polyoxyalkylene diamines. The latter typically represent products from the amination of polyoxyalkylene diols and are available, for example, under the tradename Jeffamine^{®} (from Huntsman), under the name Polyetheramines (from BASF) or under the tradename PC Amine^{®} (from Nitroil). Particularly suitable polyoxyalkylene diamines are Jeffamine^{®} D-230, Jeffamine^{®} D-400, Jeffamine^{®} D-2000, Jeffamine^{®} D-4000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-104, Jeffamine^{®} EDR-148, Jeffamine^{®} EDR-176; Polyetheramines D 230, Polyetheramines D 400 and Polyetheramines D 2000, PC Amine^{®} DA 250, PC Amine^{®} DA 400, PC Amine^{®} DA 650 and PC Amine^{®} DA 2000.

Further suitable polyamines are primary polyoxyalkylene triamines, which are typically products from the amination of polyoxyalkylene triols and are available, for example, under the name Jeffamine^{®} (from Huntsman), under the name Polyetheramines (from BASF) or under the name PC Amines^{®} (from Nitroil), such as, in particular, Jeffamine^{®} T-403, Jeffamine^{®} T-3000, Jeffamine^{®} T-5000, Polyetheramine T 403, Polyetheramine T 5000 and PC Amine^{®} TA 403.

Further suitable polyamines are polyamines having tertiary amino groups with two primary aliphatic amino groups, such as in particular N,N'-bis-(aminopropyl)-piperazine, N,N-bis-(3-aminopropyl)methylamine, N,N-bis-(3-aminopropyl)ethylamine, N,N-bis-(3-aminopropyl)propylamine, N,N-bis-(3-aminopropyl)-cyclo-hexylamine, N,N-bis-(3-aminopropyl)-2-ethyl-hexylamine, as well as the products from the double cyanoethylation and subsequent reduction of fatty amines derived from natural fatty acids, such as N,N-bis-(3-aminopropyl)dodecylamine and N,N-bis-(3-aminopropyl)tallow alkylamine, available as Triameen^{®} Y12D and Triameen^{®} YT (from Akzo Nobel).

Further suitable polyamines are polyamines containing tertiary amino groups with three primary aliphatic amino groups, such as in particular tris-(2-aminoethyl)amine, tris-(2-aminopropyl)amine and tris-(3-aminopropyl)amine.

Further suitable polyamines are polyamines containing secondary amino groups with two primary aliphatic amino groups, such as in particular 3-(2-aminoethyl)amino-propylamine, bis-hexamethylene triamine (BHMT), diethylene triamine (DETA), triethylene tetramine (TETA), tetraethylenepentamine (TEPA), pentaethylenehexamine (PEHA) and higher homologs of linear polyethyleneamines such as polyethylenepolyamine with 5 to 7 ethyleneamine units (so-called "higher ethylenepolyamine", HEPA), products from multiple cyanoethylation or cyanobutylation and subsequent hydrogenation of primary di- and polyamines with at least two primary amino groups, such as dipropylenetriamine (DPTA), N-(2-aminoethyl)-1,3-propanediamine (N3-amine), N, N'-bis(3-aminopropyl)ethylenediamine (N4-amine), N,N'-bis(3-aminopropyl)-1,4-diaminobutane, N5-(3-aminopropyl)-2-methyl-1,5-pentanediamine, N3-(3-aminopentyl)-1,3-pentanediamine, N5-(3-amino-1-ethylpropyl)-2-methyl-1,5-pentanediamine, and N,N'-bis-(3-amino-1-ethylpropyl)-2-methyl-1,5-pentanediamine.

Further suitable polyamines are polyamines having a primary and a secondary amino group, such as in particular N-methyl-1,2-ethanediamine, N-ethyl-1,2-ethanediamine, N-butyl-1,2-ethanediamine, N-hexyl-1,2-ethanediamine, N-(2-ethylhexyl)-1, 2-ethanediamine, N-cyclohexyl-1,2-ethanediamine, 4-aminomethyl-piperidine, N-(2-aminoethyl)piperazine, N-methyl-1,3-propanediamine, N-butyl-1,3-propanediamine, N-(2-ethylhexyl)-1,3-propanediamine, N-cyclohexyl-1,3-propanediamine, 3-methylamino-1-pentylamine, 3-ethylamino-1-pentylamine, 3-cyclo-hexylamino-1-pentylamine, fatty diamines such as N-cocoalkyl-1,3-propanediamine, and products from the Michael-type addition reaction of primary aliphatic diamines with acrylonitrile, maleic or fumaric acid diesters, citraconic acid diesters, acrylic and methacrylic acid esters, acrylic and methacrylic acid amides and itaconic acid diesters, reacted in molar ratio 1:1, products from the partial reductive alkylation of primary aliphatic polyamines with benzaldehyde or modified aldehydes or ketones, and partially styrenated polyamines such as Gaskamine^{®} 240 (from Mitsubishi Gas Chemical (MGC)).

Further suitable polyamines are aromatic polyamines, such as in particular m- and p-phenylenediamine, 4,4'-, 2,4' and 2,2'-diaminodiphenylmethane, 3,3'-dichloro-4,4'-diaminodiphenyl-methane (MOCA), 2,4- and 2,6-toluylenediamine, mixtures of 3,5-di-methylthio-2,4- and -2, 6-toluylenediamine (available as Ethacure^{®} 300 from Albemarle), mixtures of 3,5-diethyl-2,4- and -2,6-toluylenediamine (DETDA), 3,3',5, 5'-tetraethyl-4,4'-diaminodiphenylmethane (M-DEA), 3,3',5,5'-tetraethyl-2,2'-dichloro-4,4'-diaminodiphenylmethane (M-CDEA), 3,3'-diisopropyl-5, 5'-dimethyl-4,4'-diaminodiphenylmethane (M-MIPA), 3,3',5,5'-tetraisopropyl-4,4'-diaminodiphenylmethane (M-DIPA), 4,4'-diaminodiphenylsulfone (DDS), 4-Amino-N-(4-aminophenyl)benzenesulfonic amide, 5,5'-methylenedianthranilic acid, dimethyl (5,5'-methylenedianthranilate), 1,3-propylene bis-(4-aminobenzoate), 1,4-butylene bis-(4-aminobenzoate), polytetramethylene oxide bis-(4-aminobenzoate) (available as Versalink^{®} from Air Products), 1,2-bis-(2-aminophenylthio)ethane, 2-methylpropyl-(4-chloro-3,5-diaminobenzoate) and tert-butyl-(4-chloro-3,5-diaminobenzoate).

Further suitable polyamines are polyamidoamines which are reaction products of a monovalent or polyvalent carboxylic acid or its esters or anhydrides, in particular a dimer fatty acid, and an aliphatic, cycloaliphatic or aromatic polyamine used in stoichiometric excess, in particular a polyalkyleneamine such as DETA or TETA, in particular the commercially available polyamidoamines Versamid^{®} 100, 125, 140 and 150 (from Cognis), Aradur^{®} 223, 250 and 848 (from Huntsman), Euretek^{®} 3607 and 530 (from Huntsman) and Beckopox^{®} EH 651, EH 654, EH 655, EH 661 and EH 663 (from Cytec); and phenalkamines, also called Mannich bases, which are reaction products of a Mannich reaction of phenols, in particular cardanol, with aldehydes, in particular formaldehyde, and polyamines, in particular the commercially available phenalkamines Cardolite^{®} NC-541, NC-557, NC-558, NC-566, Lite 2001 and Lite 2002 (from Cardolite), Aradur^{®} 3440, 3441, 3442 and 3460 (from Huntsman) and Beckopox^{®} EH 614, EH 621, EH 624, EH 628 and EH 629 (from Cytec).

Preferred polyamines are polyamines selected from the group consisting of 1,3-pentanediamine (DAMP), 1,5-diamino-2-methylpentane (MPMD), 2-butyl-2-ethyl-1,5-pentanediamine (C11-neodiamine), 1,6-hexanediamine, 2,2,4- and 2,4,4-trimethylhexamethylenediamine (TMD), 1,12-dodecanediamine, 1,3-diaminocyclohexane, Bis-(4-aminocyclohexyl)methane (H12-MDA), bis-(4-amino-3-methylcyclohexyl)methane, 1-amino-3-aminomethyl-3,5,5-trimethylcyclohexane (IPDA), 1,3-bis-(aminomethyl)cyclohexane, 1,3-bis(aminomethyl)benzene (MXDA), bis-hexamethylene triamine (BHMT), diethylene triamine (DETA), triethylenetetramine (TETA), tetraethylenepentamine (TEPA), pentaethylenehexamine (PEHA) and higher homologs of linear polyethylene amines such as polyethylene polyamine with 5 to 7 ethyleneamine units (HEPA), dipropylene-triamine (DPTA), N-(2-aminoethyl)-1,3-propanediamine (N3-amine), N,N'-bis(3-aminopropyl)ethylenediamine (N4-amine), polyoxyalkylene diamines and polyoxyalkylene triamines having a molecular weight in the range from 200 to 500 g/mol, in particular the types Jeffamine^{®} D-230, Jeffamine^{®} D-400 and Jeffamine^{®} T-403, polyanilidoamines, phenalkamines, compounds of the polyamines mentioned which are completely or partially alkylated at primary amino groups.

Of course, mixtures of the above mentioned polyamines may also be used.

Suitable ways to produce the at least one polymer obtained from the combination of polyisocyanates and polyols and/or polyamines are known to the skilled person per se. For example, DE10315175 or EP2493951 disclose suitable ways to produce the at least one polymer obtained from the combination of polyisocyanates and polyols and/or polyamines.

It is important that the at least one polyurethane, i.e. polymer obtained from the combination of polyisocyanates and polyols and/or polyamines comprises anionic groups. It has been found that such polyurethanes lead to especially favorable properties of the rigid inorganic foam of the present invention. In particular, polyurethanes with such anionic groups lead to a rigid inorganic foam with low density and increased compressive strength.

According to embodiments, a polymer obtained from the combination of polyisocyanates and polyols and/or polyamines of the present invention comprises anionic groups in an amount to give an anionic charge density of the polymer of 0.01 - 100 meq per g of polymer, preferably 0.01 - 10 meq per g of polymer, more preferably 0.05 - 1 meq per g of polymer. Throughout this invention, the term "meq" stands for "milliequivalents" and refers to the amount of anionic charges in mmol. Anionic groups preferably are carboxylate groups, sulfonate groups, sulfinate groups, phosphonate groups, and/or phosphate groups, especially carboxylate groups. Polyurethanes comprising phosphonate groups, and/or phosphate groups have the additional advantage of having flame retardant properties.

Polyurethanes with anionic groups of the present invention may be produced by the reaction of isocyanates containing anionic groups with conventional diols, triols, polyols, and/or by reaction of diols, triols, polyols, containing anionic groups with conventional isocyanates. Of course, isocyanates containing anionic groups may be used in combination with isocyanates not containing anionic groups. Likewise, diols, triols, polyols, containing anionic groups may be used in combination with diols, triols, polyols, not containing anionic groups. It is also possible to use anionically functionalized isocyanates together with anionically functionalized diols, triols, polyols, optionally together with isocyanates and/or diols, triols, polyols not carrying anionic groups. Especially suitable diols containing anionic groups are dimethylolpropionic acid (DMPA), tartaric acid, N,N-bis(2-hydroxyethyl)-2-aminoethane sulfonic acid, and diethyl-bis-(2-hydroxyethyl)-aminomethylphosphonate.

According to embodiments, a polyurethane of the present invention comprises at least one segment derived from a hydrophobic polyol and at least one segment derived from a di- and/or trifunctional polypropylene glycol or polyethylene glycol. Suitable hydrophobic polyols are chosen from polypropylene glycols, polytetramethylene glycols (poly(oxytetramethylene)glycol, polyTHF), 1,4-butanediol, 1,5-pentanediol, 1,6-hexanediol, 1,7-heptanediol, 1,8-octanediol, polyesters produced by condensation of adipic acid, sebacic acid, glutaric acid, azelaic acid, undecanedioic acid, dodecanedioic acid, 3,3-dimethylglutaric acid, terephthalic acid, isophthalic acid, hexahydrophthalic acid, dimer fatty acid or mixtures thereof with low-molecular diols or triols such as ethylene glycol, propylene glycol, diethylene glycol, triethylene glycol, dipropylene glycol, 1,4-butanediol, 1,6-hexanediol, 1,8-octanediol, 1,10-decanediol, 1,12-dodecanediol, dimer fatty alcohol, glycerol, trimethylolpropane or mixtures thereof. Especially preferable, a polyurethane of the present invention comprises at least one segment derived from polytetramethylene glycols (poly(oxytetramethylene)glycols, polyTHF). A suitable di- and/or trifunctional polypropylene glycol or polyethylene glycol in particular is linear difunctional polyethylene glycol monomethyl ether.

It has been found that where at least one segment derived from a branched monomethyl ether of polypropylene glycol or polyethylene glycol and having two primary hydroxyl groups is contained in the backbone of a polyurethane of the present invention, especially stable aqueous dispersion of such polyurethane results. This is in particular the case where the aqueous dispersion of polyurethane additionally contains cement, i.e. is an aqueous cement slurry. Thus, according to embodiments, the at least one polymer obtained from the combination of polyisocyanates and polyols and/or polyamines comprises at least one segment derived from a branched monomethyl ether of polypropylene glycol or polyethylene glycol and having two primary hydroxyl groups.

Polyurethanes of the present invention comprise a backbone which is obtained from the reaction of polyisocyanates with polyols and/or polyamines. It has been found that the compatibility of polyurethanes of the present invention with at least one surfactant **S** and/or particles **N** of the present invention may be increased by optimization of the backbone of said polyurethanes. For example, polyurethane backbones based on a combination of polyols, especially hydrophobic polyols, with 4,4'-dicyclohexylmethane diisocyanate are especially suitable where protein-based surfactants are to be used. For example, polyurethane backbones based on a combination of polyols, especially hydrophobic polyols, with 1-isocyanatomethyl-3-isocyanato-1,5,5-trimethyl-cyclohexane are especially suitable where surfactants having sulfonate groups are to be used.

Polymers obtained from the combination of polyisocyanates and polyols and/or polyamines, i.e. polyurethanes, are present in the rigid inorganic foam in an amount of 0.1 - 20 w%, preferably 0.5 - 10 w%, more preferably 1 - 8 w%, still more preferably 5 - 6 w%, relative to the total dry weight of the rigid inorganic foam.

According to embodiments, the rigid inorganic foam of the present invention may additionally comprise a polymer **P** based on ethylenically unsaturated monomers, especially vinyl alcohols, vinyl esters, (meth)acrylic acid esters, vinyl aromatics, olefines, 1,3-dienes, and/or vinyl halogenides. The additional use of a polymer **P** further increases the mechanical strength, especially the compressive strength, of a rigid inorganic foam of the present invention.

Suitable vinylesters are vinyl acetate, vinyl propionate, vinyl butyrate, vinyl-2-ethylhexanoate, vinyl laurate, 1-methylvinylacetate, vinyl pivalate, and vinylesters of α-branched monocarboxylic acids with 9 to 11 C-atoms such as VeoVa9R or VeoVa10R (available from the company Resolution). Suitable (meth)acrylic acid esters are methyl(meth)acrylate, ethyl(meth)acrylate, propyl(meth)acrylate, n-butyl(meth)acrylate, t-butyl(meth)acrylate, 2-ethylhexyl(meth)acrylate. Suitable vinyl aromatics are styrene, methyl styrene, and vinyl toluene. A suitable vinyl halogenide is vinyl chloride. Suitable olefines are ethylene and propylene. Suitable 1,3-Dienes are 1,3-butadiene and isoprene.

Particularly suitable polymers **P** are selected from:
(i) copolymers of vinyl acetate with 1 - 50 w% of ethylene,
(ii) copolymers of vinyl acetate with 1 - 45 w% of ethylene and optionally 1 - 45 w% of at least one of vinyl propionate, vinyl laurate, and vinylesters of α-branched monocarboxylic acids with 9 to 11 C-atoms,
(iii) copolymers of vinyl acetate with 1 - 35 w% of ethylene and 1 - 60 w% of (meth)acrylic acid esters of branched or unbranched aliphatic alcohols, especially n-butyl acrylate or 2-ethylhexylacrylate,
(iv) copolymers of vinyl acetate with 1 - 30 w% of vinyl laurate, 1 - 35 w% of ethylene, and 1 - 30 w% of (meth)acrylic acid ester of branched or unbranched aliphatic alcohols, especially n-butyl acrylate or 2-ethylhexylacrylate,
(v) copolymers of vinyl acetate with 1 - 40 w% of ethylene and 1 - 55 w% of vinyl chloride,
(vi) polyvinyl alcohols with a degree of hydrolysis of 80 to 94 mol % and a Höppler viscosity, in 4 % aqueous solution, of in particular 1 to 30 mPas (Hoppler method at 20°C according to standard DIN 53015).

The polymers **P** may additionally comprise up to 10 w% of monomers selected from ethylenically unsaturated carboxylic or dicarboxylic acids, ethylenically unsaturated carboxylic acid amides or nitriles, esters of fumaric acid or of maleic acid, and ethylenically unsaturated sulfonic acids.

The polymers **P** may have a glass transition temperature Tg of from -25 °C to +35°C, preferably from -10 °C to +15 °C, more preferably from -10°C to +20 °C. The Tg can be measured in a method known per se by differential scanning calorimetry. The Tg can also be calculated using the Fox-equation as published in Bull. Am. Phys. Soc. 1, 123 (1956).

The polymers **P** are preferably prepared in aqueous medium and preferably by the emulsion or suspension polymerization process as described, for example, in DE-A 102008043988.

The polymers **P** may additionally comprise protective colloids. Preferred protective colloids are polyvinyl alcohols, such as partially saponified or fully saponified polyvinyl alcohols, in particular with a degree of hydrolysis of 80 to 100 mol %. Partially saponified polyvinyl alcohols with a degree of hydrolysis of 80 to 94 mol % and a Höppler viscosity, in 4 % aqueous solution, of in particular 1 to 30 mPas (Höppler method at 20°C, DIN 53015) are particularly preferred. The protective colloids mentioned can be obtained by methods known to the skilled person. The protective colloids are generally present in an amount totaling 1 to 20% by weight, based on the total weight of polymers **P.**

The polymers **P** are preferably present in the form of protective colloid stabilized powders which are redispersible in water. Dispersing the protective colloid stabilized, water redispersible polymer powders results in the protective colloid stabilized polymers **P** in the form of aqueous dispersions. The powders preferably contain 3 to 30% by weight, particularly preferably 5 to 20% by weight, of polyvinyl alcohols, especially the above-mentioned polyvinyl alcohols, based on the dry weight of the powders.

According to embodiments, a polymer **P** is present in a rigid inorganic foam of the present invention in an amount of 0.5 - 30 w%, preferably 1 - 25 w%, more preferably 2 - 20 w%, especially 10 - 15 w%, relative to the total dry weight of the rigid inorganic foam.

According to embodiments, a rigid inorganic foam of the present invention comprises further additives selected from the list consisting of rheology modifiers, thickeners, accelerators, retarders, pigments, biocides, fibers, flame retardants, plasticizers, superplasticizers, and/or fillers.

Thus, according to embodiments, a rigid inorganic foam of the present invention comprises one or more thickening agents selected from polysaccharides such as cellulose ethers and modified cellulose ethers, cellulose esters, starch ethers, guar gum, xanthan gum, polycarboxylic acids such as polyacrylic acid and its partial esters, casein and/or associative thickeners.

According to further embodiments, a rigid inorganic foam of the present invention comprises accelerators selected from amino alcohols, alkali metal and alkaline earth metal nitrates, alkali metal and alkaline earth metal nitrites, alkali metal and alkaline earth metal thiocyanates, alkali metal and alkaline earth metal halides, alkali metal and alkaline earth metal carbonates, glycerol, glycerol derivatives, glycols, glycol derivatives, aluminum salts, aluminum hydroxides, alkali metal and alkaline earth metal hydroxides, alkali metal and alkaline earth metal silicates, alkali metal and alkaline earth metal oxides, crystallization nuclei, especially calcium silicate hydrate compounds in finely divided form, and mixtures thereof.

According to further embodiments, a rigid inorganic foam of the present invention comprises retarders selected from phosphates, phosphonates, hydroxycarboxylic acids, especially citric acid, tartaric acid, or lactic acid.

According to further embodiments, a rigid inorganic foam of the present invention comprises plasticizers and/or superplasticizers for inorganic binders selected from polycarboxylate ethers, polycarboxylate esters, melamine sulfonates, melamine formaldehyde resins, naphthalene sulfonates, and/or lignosulfonates. It is, however, preferred that no or very low amounts of plasticizers or superplasticizers are added.

According to further embodiments, a rigid inorganic foam of the present invention comprises sand, especially river sand or quartz sand, quartz flour, ground limestone, ground dolomite, clays, chalk, slag, rubber granules, aluminum silicates, corundum, basalt, carbides such as silicon carbide or titanium carbide, and/or bio-based fillers such as hemp fibers or sunflower pith.

According to embodiments, a rigid inorganic foam of the present invention comprises or consists of (relative to the total dry weight of the rigid inorganic foam)
a) 9 - 99 w%, preferably 25 - 85 w%, more preferably 40 - 80 w% of at least one cured mineral binder, preferably at least one cement, especially Portland cement,
b) 0.1 - 25 w%, preferably 0.5 - 20 w%, more preferably 1 - 15 w% of at least one surfactant **S**,
c) 0.1 - 20 w%, preferably 0.5 - 10 w%, more preferably 1 - 8 w%, still more preferably 5 - 6 w% of at least one polymer obtained from the combination of polyisocyanates and polyols and/or polyamines, characterized in that the at least one polymer obtained from the combination of polyisocyanates and polyols and/or polyamines comprises anionic groups,
d) optionally 0.5 - 30 w%, preferably 1 - 25 w%, more preferably 2 - 20 w%, still more preferably 10 - 15 w% of a polymer **P,**
e) optionally 0.01 - 25 w%, preferably 0.5 - 20 w%, more preferably 1 - 10 w%, of further additives selected from the list consisting of rheology modifiers, thickeners, accelerators, retarders, pigments, biocides, fibers, flame retardants, plasticizers, superplasticizers, and/or fillers.

In a second aspect, the present invention relates to a method for producing a rigid inorganic foam, said method comprising the steps of
(A) providing an inorganic foam comprising
   a) at least one mineral binder,
   b) at least one surfactant **S** and/or particles **N,**
   c) at least one polymer obtained from the combination of polyisocyanates and polyols and/or polyamines, and
   d) water,
   characterized in that the at least one polymer obtained from the combination of polyisocyanates and polyols and/or polyamines comprises anionic groups, and
(B) curing the inorganic foam of step (A).

The weight ratio of water to the at least one mineral binder is preferably between 0.2 - 1.5, more preferably between 0.2 - 1.1, still more preferably between 0.4 - 1.1.

The gas phase contained in the inorganic foam provided in step (A) can be introduced by mechanical, physical, or chemical foaming. Non-limiting examples of gases include air, nitrogen, noble gas, carbon dioxide, hydrocarbons and mixtures thereof.

For example, the gas phase present in the foam can be introduced by mechanical foaming in the presence of the respective gas. Mechanical foaming can be carried out using a kitchen mixer or by an oscillating process or by a stator-rotor process. The gas phase can also be introduced into the foam by physical or chemical foaming, the physical or chemical foaming process being suitable for releasing a gas. Preferably, blowing agents that react or decompose with water and/or an acid are used to release the gas. Non-limiting examples of blowing agents include peroxides such as hydrogen peroxide, dibenzoyl peroxide, peroxobenzoic acid, peroxoacetic acid, alkali metal peroxides, perchloric acid, peroxomonosulfonic acid, dicumyl peroxide or cumyl hydroperoxide, carbonates and bicarbonates such as CaCO₃, Na₂CO₃ and NaHCO₃, which are preferably used in combination with an acid, metal powders such as aluminum powder, azides, hydrazides, or hydrazine. Foaming by a blowing agent can be aided by the use of a catalyst.

It is especially preferred, in a method of the present invention, that the at least one polymer obtained from the combination of polyisocyanates and polyols and/or polyamines of the present invention is used in the form of a dispersion in water. Thus, according to embodiments, in a method for producing a rigid inorganic foam of the present invention the at least one polymer obtained from the combination of polyisocyanates and polyols and/or polyamines is in the form of an aqueous dispersion of said polymer. The solid content of such aqueous dispersions is not particularly limited. The solid content may be between 20 w% and 50 w%, especially 30 - 40 w%. Aqueous dispersions of polymers obtained from the combination of polyisocyanates and polyols and/or polyamines according to the present invention may comprise further additives, especially biocides and/or pigments.

The curing of the inorganic foam typically starts when contacting the at least one mineral binder with water. Curing can, for example, be done at temperatures between 5 - 50 °C and a pressure of 1 atm. Curing at higher temperatures and/or at higher pressure is not preferred within the present context. A rigid inorganic foam is obtained, when the mechanical strength, especially the impact resistance, the flexural strength, and/or the compressive strength, does not significantly increase anymore with time. Typically, a rigid inorganic foam is obtained after hardening for 28 days at 20 °C and 1 atm pressure. It can be beneficial to cover the inorganic foam during step (B). Covering prevents the fast evaporation of water and can lead to a higher compressive strength. It is possible to additionally dry a rigid inorganic foam at elevated temperatures, for example at 40 - 90 °C.

It is possible for a method of making a rigid inorganic foam of the present invention to be performed on a given jobsite. Thus, a rigid inorganic foam of the present invention may be made on a jobsite, for example on a construction site or on a site where a system using such rigid inorganic foam is made. It is likewise possible for a method of making a rigid inorganic foam of the present invention to be performed offsite. Thus, a rigid inorganic foam of the present invention may also be pre-fabricated and transported to a job site for installation or to a site where the rigid inorganic foam is subsequently used for making further systems.

Rigid inorganic foams of the present invention may be used in systems for thermal insulation, acoustic insulation, and/or passive fire protection. In a further aspect, the present invention therefore relates to the use of a rigid inorganic foam as described above in a product or a system for thermal insulation, acoustic insulation, and/or passive fire protection.

In particular, rigid inorganic foams of the present invention can be used in products or systems for passive fire protection conforming to standard EAD 350454-00-1104:2017 and/or to classes A1 or A2 according to standard EN 13501-1.

According to embodiments, rigid inorganic foams of the present invention may be used for thermal insulation, acoustic insulation, lightweight construction, and/or passive fire protection. Uses may be in horizontal or in vertical applications, for example load-bearing structures or non-load bearing structures, walls, panels, façades, roofs, floors, or in renders.

Alternatively, or in addition, a rigid inorganic foam ad described above may also be used for filling cavities. One example is the filling of cavities in bricks. Another example is the filling of double walls.

The following examples will provide the skilled person with additional ways of carrying out the invention.

### Examples

All raw materials were purchased in high quality and used as received.

### Preparation of Polvurethane-Dispersions (PUD)

Aqueous dispersions of polymers obtained from the combination of polyisocyanates and polyols and/or polyamines (PUD) of the present invention were prepared as follows:
In a first step prepolymers were prepared from the combination of polyisocyanates and polyols and/or polyamines. The respective raw materials for each prepolymer were as indicated in below table 1. Therefore, in a glass reactor equipped with reflux condenser, thermometer, vacuum pump, dropping funnel, and magnetic stirrer, linear difunctional polyethylene glycol monomethyl ether and the respective poly(alkylene) glycol were mixed in the amounts indicated in below table 1. The mixture was heated to 95 °C, pressure reduced to < 50 mbar, and mixing continued for 10 minutes. The respective diisocyanate was then added at 95 °C in the amount as indicated in below table 1 via the dropping funnel and stirring was continued for 10 minutes. Then 0.04 w% of tin neodecanoate, relative to the polyalkylene glycol, were added and stirring was continued for 30 minutes. Then, a mixture of the respective amount of dimethylolpropionic acid as indicated in below table 1 and of tin neodecanoate in an amount of 0.04 w%, relative to the polyalkylene glycol, were added and stirring was continued for 3 hours. The resulting mixture was then allowed to cool down to yield a prepolymer obtained from the combination of polyisocyanates and polyols and/or polyamines.

In a second step, solid NaOH was dissolved in water to realize a pH of 12.6. The aqueous NaOH solution was heated while stirring with a dissolver to a temperature of 85 °C. 38 g of the respective prepolymer obtained from the combination of polyisocyanates and polyols and/or polyamines (prepared as in the first step above) was added to 54 g of the aqueous NaOH solution under stirring with a dissolver at 85 °C. Stirring was continued at 1500 rpm for 3 minutes. Then a mixture of 1.9 g ethylene diamine in 6 g of water was added over the course of 2 - 5 minutes while stirring at 1000 rpm. The temperature of the resulting dispersion was allowed to cool to 23 °C and stirring was continued for 10 minutes at 1000 rpm. The resulting dispersion was tempered in an oven at 40 °C for 16 hours and then left at 23 °C for an additional 8 hours. After this time, the dispersion was filtered through a 100 µm filter cloth and the aqueous dispersions obtained had a solid content of appr. 40 w%.

**Table 1: Aqueous dispersions of polymers obtained from the combination of polyisocyanates and polyols and/or polyamines produced**

| **PUD** | **1** | **2** | **3** | **4** | **5** | **6** | **7** |
|---|---|---|---|---|---|---|---|
| polyTHF [g] | 45 | 45 | 45 | 45 | 45 | 45 | |
| difunctional polypropylene glycol [g] | | | | | | | 45 |
| branched monomethyl ether of polyethylene glycol having two primary hydroxyl groups [g] | 12 | 12 | 12 | 8 | 16 | 16 | 12 |
| IPDI [g] | 42 | 42 | 42 | 42 | 42 | | 42 |
| MDI [g] | | | | | | 42 | |
| dimethylolpropionic acid [g] | 0 | 1 | 5 | 2 | 1 | 1 | 1 |

### Preparation of rigid inorganic foam

Rigid inorganic foams of the present invention were prepared as follows:
A device of type "Foamed Concrete Laboratory Mixer - SBL" from GERTEC Maschinen- und Anlagenbau GmbH (Germany) was used. Thereby, an aqueous foam with a predetermined density was produced in a first container, and a cement slurry was produced separately in a second container. Subsequently, the aqueous foam and the cement slurry were driven by pressurized air through a static mixing unit of the device in order to obtain an inorganic foam.

The cement slurries were prepared from 25 kg Portland cement of type CEM I, water in an amount to realize a mass ratio of water to cement of 0.4, 50 g of a PCE-based superplasticizer, and the type and amount of PUD prepared as described above as shown in below table 2. Optionally, additional polymers as shown in below table 2 were added to the cement slurry. The aqueous foam was prepared from water containing 3 w% of the respective surfactants as shown in below table 2.

The foam production with the Gertec SBL equipment was started and foams were produced by placing a layer with a thickness of 14 cm and with a targeted density as indicated in below tables into a mould. The surface of this layer was levelled off and the respective foam was left at 23 °C / 50 % r.h. After 1 day, the foam was demoulded and left for curing for a total of 28 days at 23 °C / 50 % r.h.

Details of foams thus produced are reported in below table 1.

Compressive strength was measured at 10% compression according to standard DIN EN 826 after 28 days of curing.

Water uptake was measured according to standard DIN EN 16535.

The following table 2 shows an overview of rigid inorganic foams 1 - 11 and results. Rigid inorganic foams 1 - 4 are not according to the present invention and included for comparative purposes.

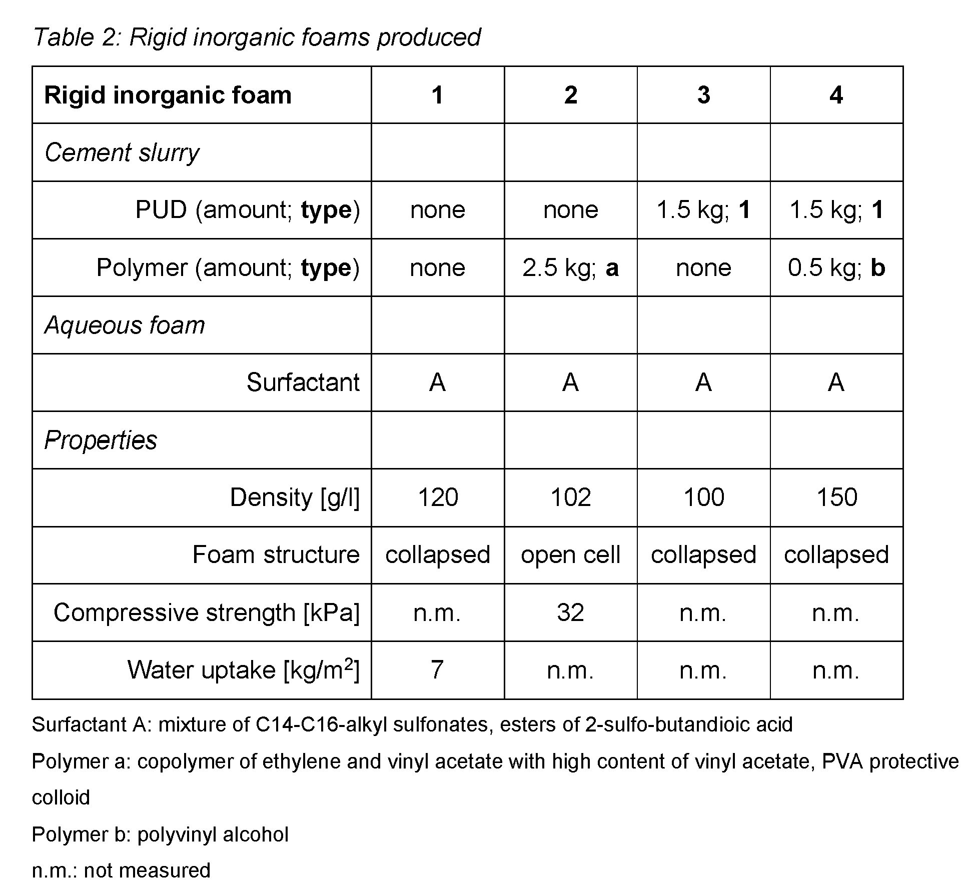

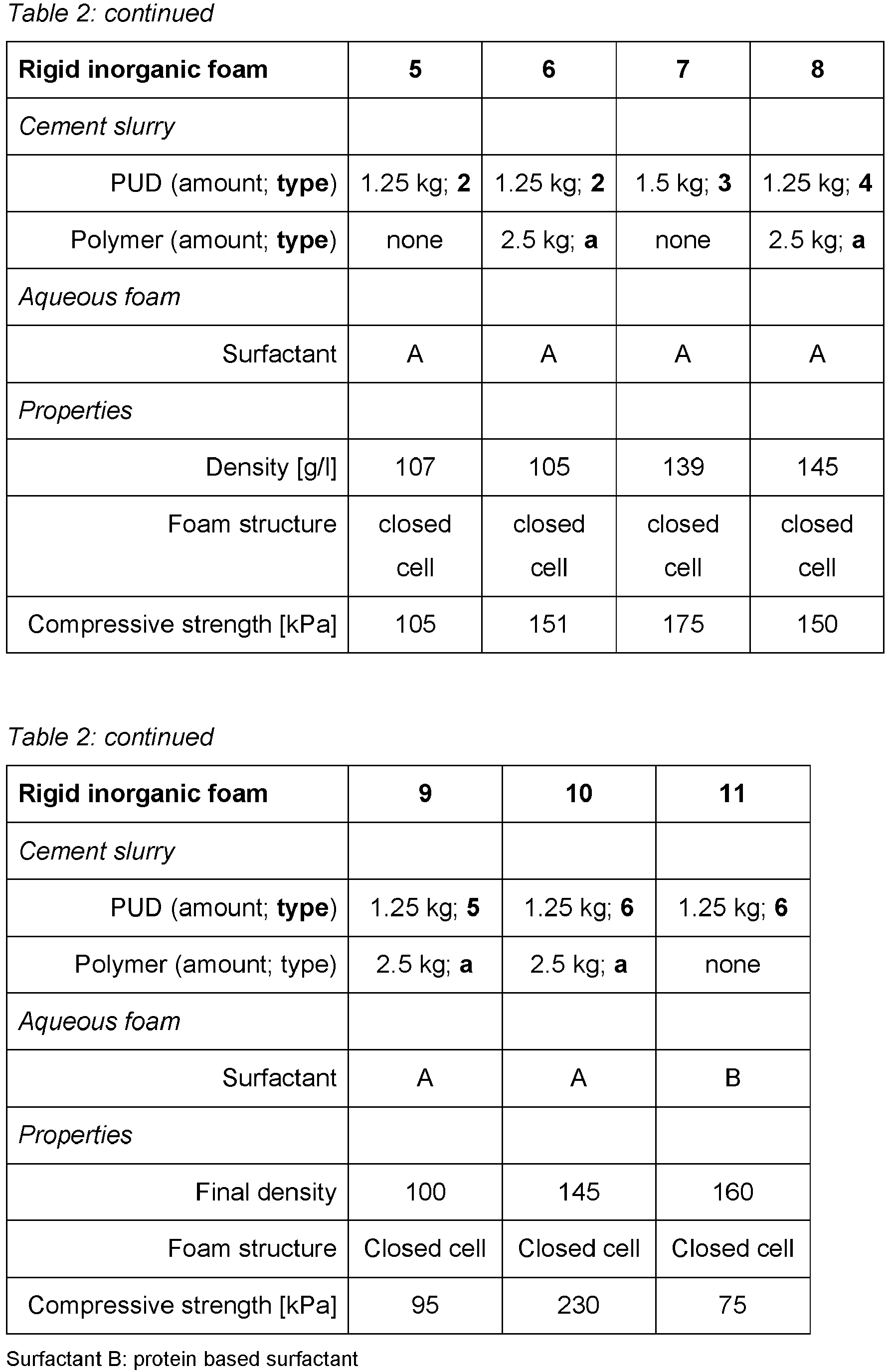

## Claims

1. Rigid inorganic foam comprising
a) at least one cured mineral binder,
b) at least one surfactant **S** and/or particles **N,** and
c) at least one polymer obtained from the combination of polyisocyanates and polyols and/or polyamines,
**characterized in that** the at least one polymer obtained from the combination of polyisocyanates and polyols and/or polyamines comprises anionic groups.

2. Rigid inorganic foam according to claim 1, **characterized in that** the rigid inorganic foam has a density of not more than 500 g per liter, especially not more than 300 g per liter, in particular not more than 200 g per liter.

3. Rigid inorganic foam according to at least one of the preceding claims, **characterized in that** the at least one polymer obtained from the combination of polyisocyanates and polyols and/or polyamines of the present invention comprises anionic groups in an amount to give an anionic charge density of the polymer of 0.01 - 100 meq per g of polymer, preferably 0.01 - 10 meq per g of polymer, more preferably 0.05 - 1 meq per g of polymer.

4. Rigid inorganic foam according to at least one of the preceding claims, **characterized in that** the at least one polymer obtained from the combination of polyisocyanates and polyols and/or polyamines comprises at least one segment derived from a branched monomethyl ether of polypropylene glycol or polyethylene glycol and having two primary hydroxyl groups.

5. Rigid inorganic foam according to at least one of the preceding claims, **characterized in that** the at least one polymer obtained from the combination of polyisocyanates and polyols and/or polyamines comprises at least one segment derived from aliphatic diisocyanates.

6. Rigid inorganic foam according to at least one of the preceding claims, **characterized in that** it additionally comprises a polymer **P** based on ethylenically unsaturated monomers, especially vinyl alcohols, vinyl esters, (meth)acrylic acid esters, vinyl aromatics, olefines, 1,3-dienes, and/or vinyl halogenides.

7. Rigid inorganic foam according to claim 5, **characterized in that** the additional polymer **P** is present in an amount of 0.5 - 30 w%, preferably 1 - 25 w%, more preferably 2 - 20 w%, still more preferably 10 - 15 w%, relative to the total dry weight of the rigid inorganic foam.

8. Rigid inorganic foam according to at least one of the preceding claims, **characterized in that** the at least one polymer obtained from the combination of polyisocyanates and polyols and/or polyamines is present in an amount of 0.1 - 20 w%, preferably 0.5 - 10 w%, more preferably 1 - 8 w%, still more preferably 5 - 6 w%, relative to the total dry weight of the rigid inorganic foam.

9. Rigid inorganic foam according to at least one of the preceding claims, **characterized in that** the at least one surfactant **S** is selected from non-ionic and anionic surfactants, preferably from C14-C16-alkyl sulfonates, esters of 2-sulfo-butandioic acid, alkylpolyglucosides, or mixtures thereof, or cocamidopropyl betaine, or a protein based surfactant.

10. Rigid inorganic foam according to at least one of the preceding claims, **characterized in that** the rigid inorganic foam comprises further additives selected from the list consisting of rheology modifiers, thickeners, accelerators, retarders, pigments, biocides, fibers, flame retardants, plasticizers, superplasticizers, and/or fillers.

11. Rigid inorganic foam according to at least one of the preceding claims, comprising or consisting of (in each case relative to the total dry weight of the rigid inorganic foam)
a) 9 - 99 w%, preferably 25 - 85 w%, more preferably 40 - 80 w% of at least one cured mineral binder, preferably at least one cement, especially Portland cement,
b) 0.1 - 25 w%, preferably 0.5 - 20 w%, more preferably 1 - 15 w% of at least one surfactant **S,**
c) 0.1 - 20 w%, preferably 0.5 - 10 w%, more preferably 1 - 8 w%, still more preferably 5 - 6 w% of at least one polymer obtained from the combination of polyisocyanates and polyols and/or polyamines,
d) optionally 0.5 - 30 w%, preferably 1 - 25 w%, more preferably 2 - 20 w%, still more preferably 10 - 15 w% of a polymer **P,**
e) optionally 0.01 - 25 w%, preferably 0.5 - 20 w%, more preferably 1 - 10 w% of further additives selected from the list consisting of rheology modifiers, thickeners, accelerators, retarders, pigments, biocides, fibers, flame retardants, plasticizers, superplasticizers, and/or fillers, **characterized in that** the at least one polymer obtained from the combination of polyisocyanates and polyols and/or polyamines comprises anionic groups.

12. Method for producing a rigid inorganic foam, said method comprising the steps of
(A) providing an inorganic foam comprising
a) at least one mineral binder,
b) at least one surfactant **S** and/or particles **N,**
c) at least one polymer obtained from the combination of polyisocyanates and polyols and/or polyamines, and
d) water,
**characterized in that** the at least one polymer obtained from the combination of polyisocyanates and polyols and/or polyamines comprises anionic groups, and
(B) curing the inorganic foam of step (A).

13. Method of producing a rigid inorganic foam according to claim 12, **characterized in that** the at least one polymer obtained from the combination of polyisocyanates and polyols and/or polyamines is in the form of an aqueous dispersion of said polymer

14. Use of a rigid inorganic foam according to at least one of claims 1 - 11 in a product or a system for thermal insulation, acoustic insulation, lightweight construction, and/or passive fire protection.

15. Use of a rigid inorganic foam according to at least one of claims 1 - 11 for filling of cavities.
